# EUROPÄISCHE PATENTSCHRIFT

(11) **EP 1 746 357 B1**
(45) Veröffentlichungstag und Bekanntmachung des Hinweises auf die Patenterteilung: **25.09.2013**
(21) Anmeldenummer: 06015177.6
(22) Anmeldetag: 20.07.2006
(51) Int. Cl.: F24F 6/18

(54) **Verfahren und Vorrichtung zur Erzeugung eines Feuchtluftstromes mit definierter relativer Feuchte**
Method and device for producing an humid airstream with a given relative humidity
Méthode et appareil produisant un courant d'air humide ayant une humidité relative donnée

(30) Priorität: 21.07.2005 DE 102005034175
(43) Veröffentlichungstag der Anmeldung: 24.01.2007
(73) Patentinhaber: F.Hoffmann-La Roche AG, 4070 Basel (CH); Roche Diagnostics GmbH, 68305 Mannheim (DE)
(72) Erfinder: Mann, Karl-Heinz, 82362 Weilheim (DE); Müller, Hans-Jürgen, Dr., 82347 Bernried (DE)
(74) Vertreter: Tiesmeyer, Johannes

(56) Entgegenhaltungen:
- EP-A1- 0 345 190
- DE-A1- 2 139 236
- GB-A- 349 355
- GB-A- 368 961
- JP-A- 62 087 261
- US-A1- 2002 139 096

## Beschreibung

Die Erfindung betrifft ein Verfahren zur Erzeugung und Bereitstellung eines Feuchtluftstromes nach dem Oberbegriff von Anspruch 1 sowie eine Vorrichtung zur Durchführung des Verfahrens nach dem Oberbegriff von Anspruch 6.

Ein derartiges Verfahren bzw. eine derartige Vorrichtung sind aus der EP 0 345 190 A1 bekannt.

Ferner sind diverse Luftbefeuchtungsverfahren und Luftbefeuchtungseinrichtungen bekannt, die nach verschiedenen Prinzipien funktionieren. So ist z.B. aus der US 4 269 087 ein Luftbefeuchtungsverfahren bekannt, bei dem Luft durch einen teilweise mit Wasser gefüllten Behälter perlt und sich dabei mit Wasserdampf sättigt. Die gewünschte relative Feuchte wird durch Zumischen trockener Luft eingestellt, wobei ein Feuchtesensor zur Überwachung der relativen Feuchte verwendet wird.

Aus der US 5 669 554 ist ein weiteres Luftbefeuchtungsverfahren bekannt, bei dem Luft durch eine teilweise mit Wasser gefüllte, beheizte Flasche perlt und sich bei mit Wasserdampf sättigt. Bei höheren Luftdurchflüssen wird die Befeuchtung fraglich, weil größere Luftblasen im Wasser entstehen können, deren Sättigung nicht mehr gewährleistet ist. Die Einstellung gleichmäßiger, niedriger Arbeitsdrücke im Bereich einiger 10 mbar ist schwierig, da der Druck der Feuchtluft auch durch den hydrostatischen Druck der Wassersäule in der Flasche beeinflusst wird, wobei der Druck bei unregelmäßiger Luftblasenbildung stark fluktuieren kann. Bei solchen Verfahren mit Durchleiten der Luft durch die Wasserfüllung eines Behälters ist normalerweise dafür Sorge zu tragen, dass eine Verkeimung des Wasservorrats in dem betreffenden Behälter vermieden wird.

Aus der US 5 394 734 ist ein Luftbefeuchtungsverfahren bekannt, bei dem zerstäubtes Wasser mittels einer Düse in einen zu befeuchtenden Raum eingespritzt wird. Die zu zerstäubende Wassermenge ist zu regeln, wobei ein Feuchtesensor zur Überwachung der relativen Feuchte in dem be- treffenden Raum verwendet wird.

Aus der US 5 988 003 ist eine Korrosionskammer mit Feuchteerzeugung durch Zerstäubung von Wasser bekannt. Kritisch ist hierbei, dass die Temperatur und die Feuchte in der Kammer gleichzeitig zu regeln sind und voneinander abhängen. Die zu zerstäubende Wassermenge wird geregelt, wobei ein Feuchtesensor zur Feuchteüberwachung erforderlich ist.

Aus der US 5 231 029 ist es bekannt, Feuchtluft mit etwa 95 % relativer Feuchte zur Vermeidung des Austrocknens von Probenträgern in einem Inkubator zu verwenden. Nähere Angaben zur Erzeugung der Feuchtluft sind in der US 5 231 029 nicht gemacht.

Es sind auch bereits Feuchtegeneratoren vorgeschlagen worden, bei denen in einem thermostatisierten Behälter Luft durch Wasser perlt und dabei mit Feuchte gesättigt wird. Die angestrebte relative Feuchte unterhalb des Sättigungsgrades wird durch isotherme Expansion des Sattdampfs erzeugt. Bei derartigen Feuchtegeneratoren ist die Einstellung gleichmäßiger, niedriger Arbeitsdrücke im Bereich einiger 10 mbar schwierig, da sich zum gewünschten Arbeitsdruck der von der Füllhöhe des Wassers in dem Behälter abhängige, hydrostatische Druck der Wassersäule addiert. Zudem fluktuiert der Druck stark durch unregelmäßige Luftblasenbildung beim Durchleiten des Wassers durch die Wassersäule.

Bei den bisher bekannten Befeuchtungsverfahren ist es schwierig, gleichzeitig eine definierte Feuchte, eine definierte Temperatur und einen definierten Druck bzw. Luftdurchfluss aufrecht zu erhalten bzw. diese Parameter weitgehend unabhängig voneinander einzustellen. Bei den Befeuchtungsverfahren mit Feuchtesensoren besteht das Problem, dass die Feuchtesensoren bei relativen Feuchten größer 90 % überwiegend ungenau funktionieren, insbesondere wenn Betauung auftritt. Befeuchtungsverfahren, bei denen Luft durch Wasserbehälter geleitet wird, um die Luft mit Dampf zu sättigen, haben den Nachteil, dass die Gefahr der Verkeimung bzw. Veralgung der Wasserbehälter besteht. Bei größeren Luftdurchflüssen entstehen üblicherweise größere Luftblasen im Wasser, deren Feuchtesättigung nicht gewährleistet ist. Außerdem ist aus den schon genannten Gründen die Einhaltung kleiner Arbeitsdrücke schwierig.

Der vorliegenden Erfindung liegt die Aufgabe zugrunde, ein Verfahren zur Erzeugung eines Feuchtluftstromes mit definierter relativer Feuchte und Temperatur anzugeben, das mit einfachen Mitteln durchführbar ist und eine präzise Feuchteeinstellung auch bei relativen Feuchten nahe der Dampfsättigungsgrenze der Luft erlaubt.

Zur Lösung dieser Aufgabe wird das Verfahren nach Anspruch 1 vorgeschlagen.

Der Luftstrom wird vorzugsweise unter Verwendung eines Umgebungsluft ansaugenden und in die Leitungsanordnung fördernden Kompressors erzeugt, dessen Förderleistung zum Zwecke der Druckregelung in der Leitungsanordnung steuerbar ist.

Die Erzeugung von heißem Wasserdampf erfolgt vorzugsweise mittels eines Verdampfers, dem kontinuierlich und dosiert Flüssigwasser zugeführt wird, so dass er einen kontinuierlichen und gleichmäßigen Heißdampfstrom erzeugen kann. Vorzugsweise ist die Temperatur des Verdampfers auf einen Wert deutlich über 100°C eingestellt, so dass der von ihm abgegebene Dampf überhitzter Dampf (Wasser im Gaszustand) ist. Dieser überhitzte Dampf wird vorzugsweise als gleichmäßiger Strom der Leitungsanordnung zugeführt und in den Luftstrom eingeleitet, z.B. mittels einer in die Leitungsanordnung hineinragenden Düse. Dabei nimmt die Luft den überhitzten Dampf auf, ohne dabei in die Feuchtesättigung zu gelangen. Die Temperatur des Luft-Wasserdampfgemisches steigt dabei auf etwa 100° C an. Der heiße Feuchtluftstrom wird dann dem Wasserabscheider zugeführt, wobei dessen Temperatur so eingestellt ist, dass der Feuchtluftstrom unter Taupunkttemperatur abgekühlt wird. Unter Bildung von Kondensat entzieht der Abscheider der Feuchtluft Wärme und Wasser, so dass die relative Feuchte bis zur Sättigung der Feuchtluft ansteigen kann. Kondensat wird in dem Wasserabscheider abgeschieden. Der Wasserabscheider dient somit vorzugsweise zur Erzeugung gesättigter feuchter Luft mit definierter Temperatur. Der Wasserabscheider sollte so dimensioniert sein, dass er die natürliche Feuchtevariation der angesaugten Umgebungsluft ausgleichen kann. Die gesättigte Feuchtluft verlässt den Wasserabscheider und wird dann auf einen über der Abscheidertemperatur liegenden Temperaturwert erwärmt, um die relative Feuchte auf einen definierten Wert unterhalb der Sättigungsgrenze einzustellen. Der Feuchtluftstrom wird dann aus der Leitungsanordnung ausgebracht und kann einer spezifischen Verwendung zugeführt werden, etwa der Mischbehandlung einer Wasser enthaltenden Flüssigkeit auf einem Flüssigkeitsträger.

Die vorliegende Erfindung ist entstanden auf der Basis von Überlegungen zur Überwindung von Problemen, welche bei einem solchen Anwendungsfall der Mischbehandlung einer Wasser enthaltenden Flüssigkeit aufgetreten sind. Ein solcher konkreter Anwendungsfall ist die Durchführung eines Verfahrens zum Nachweis von Analyten in einer Flüssigkeit, bei dem die Flüssigkeit einer Mischbehandlung auf einer immobilisierte Reaktanden aufweisenden Fläche eines Trägers (Biochips) unterzogen wird, wobei die Flüssigkeit bei der Mischbehandlung mittels einer zu der Trägerfläche gerichteten Düse mit einem die Trägerfläche zumindest bereichsweise abtastend überstreichenden Luftstrahl beaufschlagt wird. Ein solches Verfahren zum Nachweis von Analyten und eine Vorrichtung zur Durchführung des Verfahrens sind in der deutschen Patentanmeldung DE 10 2004 028 303.6 der Anmelderin offenbart. Es wird insoweit auf die DE 10 2004 028 303.6 Bezug genommen und deren Offenbarung in die vorliegende Anmeldung einbezogen.

Das sich insbesondere bei der Verwendung von wannenartigen Biochips mit im Wesentlichen ebenem Boden als Trägerfläche hervorragend geeignete Verfahren zum Nachweis von Analyten bewirkt eine effiziente lokale Durchmischung der die Analyten enthaltenden Probenflüssigkeit im Bereich der momentan vom Luftstrahl beaufschlagten Zone. Die Düse wird dabei von oben her so auf die Probenflüssigkeit gerichtet, dass der Luftstrahl in seinem Auftreffbereich Probenflüssigkeit lokal verdrängt. Dies hat den Effekt, dass der Probenflüssigkeitspegel im Auftreffbereich des Luftstrahls auf einen sehr geringen Wert von z.B. nur wenigen µm reduziert wird und dass in einer diesen Bereich verringerten Flüssigkeitspegels enthaltenden Zone die Probenflüssigkeit durch Verwirbelung effizient homogenisiert wird. Da der Auftreffpunkt des Luftstrahls die Trägerfläche abtastend überstreicht, wandert die Zone der intensiven Durchmischung der Probenflüssigkeit am Chipboden über die Trägerfläche, so dass in der zunächst an Analyten durch vorausgegangene Bindungsreaktionen verarmten Grenzschicht neue Analyten beschleunigt zugeführt werden. Damit wird die Wahrscheinlichkeit weiterer Bindungsreaktionen zwischen den Analyten und den immobilisierten Reaktanden vergrößert, so dass eine Empfindlichkeitssteigerung bzw. eine Reduzierung der Inkubationszeit und eine Verbesserung der Homogenität, insbesondere der ortsunabhängigen Homogenität der Analytbindung im Vergleich mit herkömmlichen Verfahren erreicht werden kann. Zur Reduktion der Verdunstung von Probenflüssigkeit in dem Biochip wird die der Düse zugeführte Luft mittels einer Luftbefeuchtungseinrichtung befeuchtet.

Abhängig von der Feuchte der eingeblasenen Luft variieren die Verdunstung der Analytflüssigkeit und auch deren Temperatur, da Abkühlung aufgrund der der Analytflüssigkeit entzogenen Verdunstungsenergie stattfindet. Beide Effekte können die Analyse erheblich stören.

Der Erfinder hat erkannt, dass hochfeuchte Luft beim Einblasen in einen betreffenden Biochip eine deutlich reduzierte Verdunstung und reduzierte Temperaturabsenkung der Analytflüssigkeit bewirkt, wobei die Luft jedoch nicht mit Feuchte gesättigt sein sollte, da das Einblasen von gesättigter Luft in den Biochip häufig zu unerwünschten Kondensationseffekten in dem Biochip und dessen Umgebung führt, die ebenfalls die Analyse erheblich stören können.

Das Verfahren gemäß der vorliegenden Erfindung eignet sich sehr gut zur Erzeugung eines hochfeuchten, jedoch noch nicht mit Feuchte gesättigten Luftstrahls vorbestimmter Temperatur für die Mischbehandlung einer Analytflüssigkeit in einem Biochip, wobei die Temperatur der eingeblasenen Feuchtluft und die Temperatur der Analytflüssigkeit des Biochips möglichst wenig voneinander abweichen sollten. Dies kann z.B. erreicht werden, indem die Temperatur des Biochips und der Biochip-Umgebung entsprechend der Temperatur der Feuchtluft geregelt wird.

Der nach dem Verfahren der vorliegenden Erfindung erzeugte Luftstrom kann in dem vorstehend angesprochenen Anwendungsfall der Mischbehandlung einer Analytflüssigkeit in einem Biochip mittels einer Austrittsdüse auf den Biochip gerichtet werden. Ggf. können simultan mehrere Düsen zur Behandlung eines oder mehrere Biochips zur Anwendung kommen. Die relative Feuchte des die Düse verlassenden Feuchtluftstrahls kann z.B. bei 95 % liegen. Durch geeignete Temperierung des Biochips und der Biochip-Umgebung lässt sich dabei unerwünschte Kondensation von Wasser aus dem Feuchtluftstrahl vermeiden. Die Verdunstung der Analytflüssigkeit flüssigkeit bei der Mischbehandlung ist gering und eine unerwünschte Abkühlung der Analytflüssigkeit wird vermieden.

Das Verfahren zur Erzeugung eines Feuchtluftstromes nach der vorliegenden Erfindung ist jedoch nicht auf den vorstehend angesprochenen Anwendungsfall der Mischbehandlung einer Flüssigkeit beschränkt, sondern kann überall dort mit Vorteilen eingesetzt werden, wo eine präzise Feuchtluftatmosphäre geschaffen und aufrecht erhalten werden soll, etwa in Inkubatoranwendungen ganz allgemein.

Das Merkmal des Ausbringens der Feuchtluft als Feuchtluftstrom aus der Leitungsanordnung soll nicht zwangsläufig bedeuten, dass die Feuchtluft ins Freie auszubringen ist, sondern soll auch den Fall umfassen, dass der Feuchtluftstrom an eine unmittelbar an die Leitungsanordnung anschließende Kammer, Anschlussleitung oder dgl. abgegeben wird.

Gegenstand der Erfindung ist ferner eine Vorrichtung zur Erzeugung eines Feuchtluftstromes, welche zur Durchführung des erfindungsgemäßen Verfahrens geeignet ist und die Merkmale gemäß Anspruch 6 aufweist.

Bei der Druckluftquelle handelt es sich vorzugsweise um einen hinsichtlich seiner Fördermenge steuerbaren Kompressor zur Erzeugung von Druckluft aus der Umgebungsluft und zur Einleitung der Druckluft in die Leitungsanordnung.

Die Dampfquelle umfasst vorzugsweise einen Verdampfer mit wenigstens einer Leitungswendel, eine Heizeinrichtung für die Leitungswendel und eine Wasserversorgungseinrichtung zur dosierten Zuführung von Wasser zu dem Verdampfer.

Gemäß einer Variante der Erfindung kann die Wasserversorgungseinrichtung ein Wasserreservoir und eine flüssiges Wasser aus dem Wasserreservoir zum Verdampfer fördernde Dosierpumpe umfassen.

Der Mischer weist vorzugsweise wenigstens eine in den Luftströmungsweg hineinragende Düse zum Einblasen überhitzten Wasserdampfes in den Luftstrom auf.

Der Wasserabscheider ist vorzugsweise ein thermostatisierbarer Wasserkondensator mit Ablauf für das Wasserkondensat. Beim Durchströmen der vom Mischer kommenden, normalerweise ungesättigten Feuchtluft durch den Wasserkondensator wird die Feuchtluft auf bzw. unter Taupunkttemperatur abgekühlt, so dass die den Kondensator verlassende Feuchtluft im Wesentlichen mit Dampf gesättigt ist und die im Wasserabscheider herabgesetzte Temperatur aufweist. Zur Regelung der Temperatur des Wasserabscheiders wird eine thermoelektrische Wärmepumpe vorgeschlagen.

Gemäß einer bevorzugten Weiterbildung der Erfindung umfasst die Vorrichtung Mittel zur Regelung des Luftdrucks in der Feuchtluftabgabeeinrichtung. Der Ausgabeleitungsbereich der Feuchtluftabgabeeinrichtung weist gemäß einer bevorzugten Ausführungsform der Erfindung wenigstens eine Feuchtluftauslassdüse auf, welche einen Feuchtluftausgangsstrahl formt. Vorzugsweise ist der Ausgabeleitungsbereich als Feuchtluftsammelkammer zur Realisierung eines "Druckreservoirs" ausgebildet.

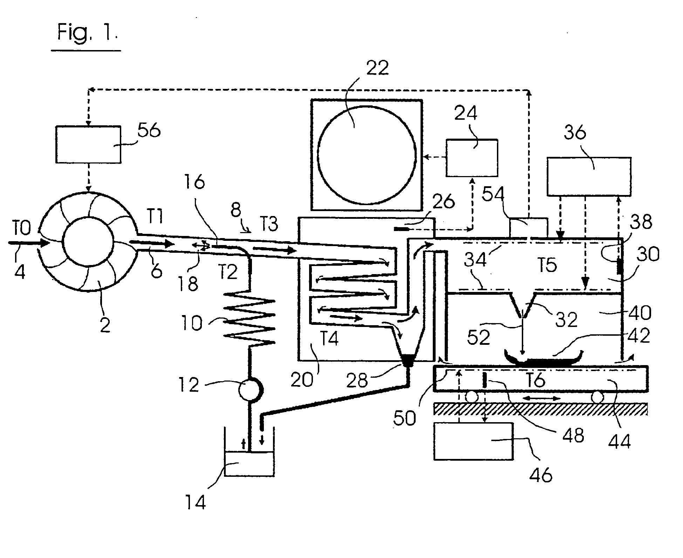

Ein Ausführungsbeispiel der Erfindung wird nachstehend unter Bezugnahme auf die Fig. 1 näher erläutert.

Fig. 1 zeigt in einer schematischen Darstellung eine Vorrichtung zur Erzeugung eines Feuchtluftstromes nach der Erfindung im Einsatz bei der Mischbehandlung einer Analytflüssigkeit in einem Biochip. Die Vorrichtung gemäß Fig. 1 umfasst als Druckluftquelle einen Kompressor 2, welcher Umgebungsluft 4 der Temperatur TO ansaugt und in die Leitung 6 der Leitungsanordnung 8 drückt, so dass ein Luftstrom in der Leitungsanordnung 8 entsteht.

Ein Wasserverdampfer 10 dient zur Bereitstellung von heißem Wasserdampf. Im Beispielsfall weist der Verdampfer eine Verdampferwendel aus einem gewickelten Kanal von 1 mm² Querschnitt und ca. 1500 mm Länge auf, wobei der Wendeldurchmesser ca. 20 mm beträgt.

Dem Verdampfer 10 wird mittels einer im Beispielsfall als Schlauchpumpe realisierten Dosierpumpe 12 flüssiges Wasser aus dem Vorratsbehälter 14 kontinuierlich zugeführt. In der Verdampferwendel beginnt das Wasser zu sieden und verwandelt sich in ein Gemisch aus Tropfen und Dampfblasen. Durch ständige Umlenkung bekommen die Tropfen intensiven thermischen Kontakt mit der Wendelwandung, verdampfen schließlich komplett und erzeugen einen gleichmäßigen Strom überhitzten Wasserdampfes, d.h. Wasser in gasförmigem Zustand mit einer Temperatur T2 > 100°C.

Eine an den Verdampfer 10 angeschlossene Düse 16 injiziert den als gleichmäßigen Strom zugeführten Heißdampf in die Leitung 6 und somit in den Luftstrom hinein. Der Bereich der Leitung 6 in dem dies geschieht, wird auch als Mischer 18 bezeichnet. Die vom Kompressor 2 mit der Temperatur T1 in die Leitung 6 geförderte Druckluft erfährt im Mischer 18 eine Temperaturerhöhung auf T3, wobei diese Gemischtemperatur T3 ungefähr 100°C beträgt. Diese Gemischtemperatur ergibt sich insbesondere aufgrund der Kondensationswärme. Die den Mischerbereich mit der Temperatur T3 verlassende Feuchtluft ist vorzugsweise ungesättigt. Sie strömt in einen Kondensationswasserabscheider 20, welcher mittels einer Regeleinrichtung mit einer thermoelektrischen Wärmepumpe 22, einem Regelgerät 24 und einem Temperatursensor 26 auf eine bestimmte Temperatur T4 thermisch geregelt ist. Im Beispielsfall beträgt die Temperatur T4 etwa 35°C. Bei dieser Temperatur wird der Taupunkt erreicht, so dass der Wasserabscheider 20 der Feuchtluft unter Bildung von Kondensat Wärme entzieht. Die Leitungswände des Abscheiders bestehen aus thermisch gut leitendem Material und haben eine große innere Oberfläche.

Aufgrund des Gefälles der Leitung in dem Wasserabscheider 20 fließt das Kondensatwasser in einen Sumpf 28 am tiefsten Punkt des Wasserabscheiders 20 und wird von dort abgeleitet zu dem Vorratsbehälter 14. Die aus dem Wasserabscheider 20 ausströmende Feuchtluft hat eine relative Feuchte von 100 % und eine Temperatur T4 von etwa 35°C. Den Abschluss der Leitungsanordnung 8 bildet ein "Druckreservoir" in Form einer Feuchtluft-Sammelkammer 30 mit wenigstens einer Luftauslassdüse 32. An den Wänden der Sammelkammer 30 befinden sich elektrische Heizmittel 34, z.B. Heizfolien oder dgl., die Bestandteil einer Temperaturregeleinrichtung zur Temperaturregelung der Feuchtluft in der Sammelkammer 30 sind. Diese Temperaturregeleinrichtung umfasst ferner das Regelgerät 36 und den Temperatursensor 38, welcher als Ist-Wertgeber die Feuchtlufttemperatur in der Sammelkammer 30 überwacht. Die Temperatur T5 in der Sammelkammer ist größer als die Temperatur T4 des Wasserabscheiders. Die in die Sammelkammer einströmende gesättigte Feuchtluft wird somit auf T5 erwärmt, wobei T5 im Beispielsfall ca. 36°C beträgt. Aufgrund der Erwärmung der Feuchtluft, sinkt deren relative Feuchte (im Beispielsfall um ca. 5,6 % pro °C). In der Feuchtluft-Sammelkammer 30 wird somit hochfeuchte, aber ungesättigte Luft zur Ausgabe über die Düse 32 bereitgehalten. Die an der Düse 32 austretende Feuchtluft kann somit einer spezifischen Verwendung zugeführt werden. Im Beispielsfall ist dies die Mischbehandlung einer Analytflüssigkeit in einem wannenartig ausgebildeten Biochip 42 mit ebenem Boden. Der Biochip befindet sich in einem Inkubatorraum 40, in den die Düse 32 mündet.

Mit 44 ist in Fig. 1 eine gesteuert bewegbare Basis für den Biochip 42 bezeichnet.

Die Temperatur T6 der Basis 44 ist regelbar, wobei als Elemente der Temperaturregeleinrichtung das Regelgerät 46, der Istwertgeber-Temperatursensor 48 und die Heizeinrichtung 50 erkennbar sind. Selbstverständlich könnte bei der Temperaturregeleinrichtung auch eine Kühleinrichtung vorgesehen sein.

Bei der Mischbehandlung des Biochips 42 wird die Temperatur T6 auf einen Wert geregelt, der möglichst nahe bei der Temperatur T5 der Feuchtluft-Sammelkammer 30 liegt.

Damit der die Düse 32 verlassende Feuchtluftstrahl die Flüssigkeitsoberfläche in dem Biochip 42 zumindest bereichsweise abtastend überstreichen kann, wird die Basis 44 entsprechend bewegt. Alternativ oder zusätzlich könnte auch die Düse 32 bewegt werden, um die Flüssigkeitsoberfläche in dem Biochip 42 zu scannen.

Hinsichtlich der Feuchteeinstellung ist noch zu berücksichtigen, dass die isotherme Expansion der Feuchtluft an der Düse 32 die relative Feuchte reduziert, und zwar um ca. 1,2 % bei 12 mbar.

Der Druck in der Feuchtluft-Sammelkammer 30 wird mittels einer Druckregeleinrichtung auf einen vorbestimmten Wert von beispielsweise 12 mbar geregelt. Die Druckregeleinrichtung umfasst einen Drucksensor 54 zur Überwachung des Drucks in der Kammer 30, ein Regelgerät 56 und als Stellelement den Kompressor 2. In der Feuchtluft beträgt der Volumen- bzw. Druckanteil der Luft ca. 90 % und der Wasserdampfanteil ca. 10 %. Die Druckregelung kompensiert den Druckanstieg durch den injizierten Heißdampf durch Förderung einer entsprechend reduzierten Luftmenge.

Die Erfindung ermöglicht die Erzeugung eines Luftstromes mit definierter gleichbleibender Feuchte und einer bestimmten Temperatur. In dem beschriebenen Anwendungsfall der Mischbehandlung einer Analytflüssigkeit in einem Biochip bewirkt der Luftstrom eine niedrige, reproduzierbare Analytverdunstung und eine definierte reproduzierbare Ananlyttemperatur. Im Beispielsfall wird die Flüssigkeit in dem Biochip mit einem Luftstrom von ca. 13 ml/s beaufschlagt. Der Druck in der Feuchtluftsammelkammer wird auf ca. 12 mbar geregelt. Die im Verdampfer verdampfte Wassermenge pro Zeiteinheit beträgt ca. 0,6 µl/s.

Es ist eine präzise Feuchteeinstellung durch Einstellen der Feuchtlufttemperatur möglich. Es werden keine Feuchtesensoren benötigt, was besonders vorteilhaft ist, weil Feuchtesensoren bei Feuchten nahe der Sättigungsgrenze relativ ungenau arbeiten. Bei geeigneter Dimensionierung der Vorrichtung sind Luftdurchfluss, Temperatur und Feuchte weitgehend unabhängig voneinander variierbar, z.B. falls Änderungen der Düsenanzahl oder des Düsenquerschnittes nötig wären.

Die erfindungsgemäße Vorrichtung ist rasch betriebsbereit und rasch abschaltbar. Die vom Kompressor angesaugte Luft muss nicht vorbehandelt werden hinsichtlich Temperatur oder Feuchte. Bei entsprechender Temperaturführung ist die erzeugte Feuchte keimfrei. Der Feuchtegenerator ist weitgehend wartungsfrei. Seine Gestaltung erlaubt schnelles Austrocknen des Innenbereichs nach der Benutzung. Alle temperierten Komponenten lassen sich beheizen zur Unterstützung des Austrocknens.

## Patentansprüche

1. Verfahren zur Erzeugung eines Feuchtluftstromes mit einer definierten relativen Feuchte, insbesondere zur Mischbehandlung einer insbesondere Wasser enthaltenden Flüssigkeit auf einem Flüssigkeitsträger (42), umfassend die Schritte:
- Erzeugen eines Luftstromes in einer Leitungsanordnung (8),
- Erzeugen von heißem Wasserdampf,
- Einbringen des Wasserdampfes in den Luftstrom zur Erzeugung von strömender heißer Feuchtluft,
**dadurch gekennzeichnet, dass** es ferner die Schritte umfasst:
- Durchleiten der heißen Feuchtluft durch einen Wasserabscheider (20) wobei die heiße Feuchtluft in dem Wasserabscheider (20) unter Taupunkttemperatur abgekühlt wird, um gesättigte Feuchtluft mit einer bestimmten Temperatur zu erzeugen,
- Erwärmen der vom Wasserabscheider (20) kommenden Feuchtluft so weit über die bestimmte Temperatur hinaus, dass sie beim nachfolgenden Ausbringen aus der Leitungsanordnung eine relative Feuchte größer als 80 %, insbesondere größer als 90 % hat, und
- Ausbringen der erwärmten Feuchtluft als Feuchtluftstrom aus der Leitungsanordnung (8).

2. Verfahren nach Anspruch 1, wobei bei dem Schritt des Einbringens des Wasserdampfes in den Luftstrom überhitzter Wasserdampf in den Luftstrom eingebracht wird.

3. Verfahren nach einem der vorhergehenden Ansprüche, wobei der Feuchtluftstrom als Strahl auf eine Flüssigkeit auf einem Flüssigkeitsträger (42) gerichtet wird, um diese Flüssigkeit einer Mischbehandlung durch Beaufschlagung mit dem Feuchtluftstrahl zu unterziehen.

4. Verfahren nach Anspruch 3, wobei der Feuchtluftstrahl (52) und/oder der Flüssigkeitsträger (42) bei der Beaufschlagung der Flüssigkeit abgelenkt bzw. bewegt wird, so dass der Feuchtluftstrahl (52) den Flüssigkeitsträger zumindest bereichsweise abtastend überstreicht.

5. Verfahren nach einem der Ansprüche 3 bis 4, wobei der Flüssigkeitsträger (42) ein Biochip mit immobilisierten Reaktanden an dem Flüssigkeitsträgerboden ist und wobei die Flüssigkeit Analyten enthält, die mit Reaktanden an dem Flüssigkeitsträgerboden Bindungen eingehen können.

6. Vorrichtung zur Erzeugung eines Feuchtluftstromes,
umfassend
- eine Druckluftquelle (2) zur Erzeugung eines Luftstromes in einer Leitungsanordnung (8),
- eine Dampfquelle (10, 12, 14) zur Bereitstellung von heißem Wasserdampf,
- einen Mischer (18) zum Einbringen des Wasserdampfes in den Luftstrom,
**dadurch gekennzeichnet, dass** sie ferner umfasst:
- einen Wasserabscheider (20) mit einem thermostatisierbaren Wasserkondensator zur Abkühlung der von dem Mischer (18) kommenden Feuchtluft unter Taupunkttemperatur, um gesättigte Feuchtluft mit einer bestimmten Temperatur zu erzeugen, und eine
- Feuchtluftabgabeeinrichtung (30, 32) zum Ausbringen der Feuchtluft, wobei die Feuchtluftabgabeeinrichtung (30, 32) einen im Strömungsweg dem Wasserabscheider (20) nachgeschalteten Leitungsbereich (30) mit Temperatureinstellmitteln (34) aufweist, wobei die Temperatureinstellmittel (34) dazu eingerichtet sind, die vom Wasserabscheider (20) kommende Feuchtluft so weit über die bestimmte Temperatur hinaus zu erwärmen, dass sie beim Ausbringen eine relative Feuchte größer als 80%, insbesondere größer als 90% hat.

7. Vorrichtung nach Anspruch 6, wobei die Druckluftquelle (2) einen Kompressor zur Erzeugung von Druckluft aus der Umgebungsluft und zur Einleitung der Druckluft in die Leitungsanordnung (8) umfasst.

8. Vorrichtung nach einem der Ansprüche 6 bis 7, wobei die Dampfquelle einen Verdampfer (10) mit wenigstens einer Leitungswendel und einer Heizeinrichtung für die Leitungswendel sowie eine Wasserversorgungseinrichtung (12, 14) zur Zuführung von flüssigem Wasser zu dem Verdampfer (10).

9. Vorrichtung nach Anspruch 8, wobei die Wasserversorgungseinrichtung ein Wässerreservoir (14) und eine flüssiges Wasser aus dem Wasserreservoir (14) zum Verdampfer (10) fördernde Dosierpumpe (12) umfasst.

10. Vorrichtung nach einem der Ansprüche 6 bis 9, wobei der Mischer (18) wenigstens eine in den Luftströmungsweg hinein ragende Düse (16) zum Einblasen des Wasserdampfes in den Luftstrom umfasst.

11. Vorrichtung nach einem der Ansprüche 6 bis 10, wobei dem Wasserabscheider (20) eine thermoelektrische Wärmepumpe (22) zur Temperaturregelung zugeordnet ist.

12. Vorrichtung nach einem der Ansprüche 6 bis 11, wobei sie Mittel (2, 54, 56) zur Regelung des Feuchtluftdruckes in der Feuchtluftabgabeeinrichtung (30, 32) umfasst.

13. Vorrichtung nach einem der Ansprüche 6 bis 12, wobei der Druck der Feuchtluft in dem Leitungsbereich (30) mittels einer Druckregeleinrichtung regelbar ist, welche wenigstens einen Drucksensor (54) zur Erfassung des Drucks in dem Leitungsbereich (30) und Stellmittel (2, 56) zur Beeinflussung der Druckluftzufuhr von der Druckluftquelle (2) nach Maßgabe der Abweichung des Ist-Druckes vom Soll-Druck in dem Leitungsbereich (30) umfasst.

14. Vorrichtung nach einem der Ansprüche 6 bis 13, wobei der Leitungsbereich eine Feuchtluft-Sammelkammer (30) umfasst, an der wenigstens eine Feuchtluftauslassdüse (32) vorgesehen oder angeschlossen ist.

## Claims

1. A process for generating a current of humid air having a defined relative humidity, especially for a mixing treatment of a liquid, containing in particular water, on a liquid carrier (42), comprising the steps of:
- generating a current of air in a tubing arrangement (8),
- generating hot water vapour,
- introducing the water vapour into the air current to generate flowing hot humid air,
**characterised in that** it further comprises the steps of:
- passing the hot humid air through a water separator (20), whereby the hot humid air in the water separator (20) is cooled below dew point temperature in order to generate saturated humid air having a defined temperature,
- heating the humid air coming from the water separator (20) above the defined temperature to such an extent that, upon being subsequently discharged from the tubing arrangement, it has a relative humidity of more than 80%, preferably of more than 90%, and
- discharging the heated humid air from the tubing arrangement (8) as a current of humid air.

2. The process according to claim 1, wherein, in the step of introducing the water vapour into the air current, superheated water vapour is introduced into the air current.

3. The process according to any one of the preceding claims, wherein the current of humid air is directed as a jet onto a liquid on a liquid carrier (42) in order to subject this liquid to a mixing treatment by impacting it with a jet of humid air.

4. The process according to claim 3, wherein the jet of humid air (52) and/or the liquid carrier (42) are deflected or moved while the liquid is impacted such that the jet of humid air (52) sweeps over at least certain areas of the liquid carrier in a scanning manner.

5. The process according to any one of claims 3 to 4, wherein the liquid carrier (42) is a biochip with immobilized reactants on the bottom of the liquid carrier and wherein the liquid contains analytes which can bind to reactants on the bottom of the liquid carrier.

6. A device for generating a current of humid air, the device comprising:
- a source of compressed air (2) for generating an air current in a tubing arrangement (8),
- a source of vapour (10, 12, 14) for providing hot water vapour,
- a mixer (18) for introducing the water vapour into the air current,
**characterised in that** it further comprises:
- a water separator (20) having a water condenser that can be thermostated for cooling the humid air coming from the mixer (18) below dew point temperature in order to generate saturated humid air having a defined temperature, and
- a device for releasing humid air (30, 32) for discharging the humid air, the device for releasing humid air (30, 32) having a tube area (30) arranged in the flow path downstream of the water separator (20) and having temperature adjusting means (34), wherein the temperature adjusting means (34) are configured to heat the humid air coming from the water separator (20) above the defined temperature to an extent, such that, upon being discharged, it has a relative humidity of more than 80%, preferably of more than 90%.

7. The device according to claim 6, wherein the source of compressed air (2) comprises a compressor for generating compressed air from the ambient air and for passing the compressed air into the tubing arrangement (8).

8. The device according to any one of claims 6 to 7 wherein the vapour source comprises an evaporator (10) with at least one tube coil and a heating device for the tube coil as well as a water supply device (12, 14) for supplying liquid water to the evaporator (10).

9. The device according to claim 8, wherein the water supply device comprises a water reservoir (14) and a metering pump (12) that conveys liquid water from the water reservoir (14) to the evaporator (10).

10. The device according any one of claims 6 to 9, wherein the mixer (18) comprises at least one nozzle (16) projecting into the flow path of the air for blowing water vapour into the air current.

11. The device according to any one of claims 6 to 10, wherein a thermoelectric heat pump (22) is allocated to the water separator (20) for temperature control.

12. The device according to any one of claims 6 to 11, wherein it comprises means (2, 54, 56) for controlling the pressure of the humid air in the device for releasing humid air (30, 32).

13. The device according to any one of claims 6 to 12, wherein the pressure of the humid air in the tube area (30) can be controlled by a pressure control device which comprises at least one pressure sensor (54) for detecting the pressure in the tube area (30) and adjusting means (2, 56) for influencing the supply of compressed air from the compressed air source (2) in accordance with the deviation of the actual pressure from the target pressure in the tube area (30).

14. The device according to any one of claims 6 to 13, wherein the tube area comprises a collecting chamber for humid air (30) which is provided with or connected to at least one outlet nozzle for humid air (32).

## Revendications

1. Procédé pour la production d'un courant d'air humide ayant une humidité relative définie, en particulier pour le traitement de mélange d'un liquide contenant en particulier de l'eau sur un support liquide (42), comprenant les étapes suivantes :
- générer un flux d'air dans un agencement de conduits (8),
- générer de la vapeur d'eau chaude,
- introduire la vapeur d'eau dans un flux d'air pour la production d'un flux d'air chaud humide,
**caractérisé en ce qu'**il contient également les étapes suivantes :
- conduire l'air humide chaud à travers un séparateur d'eau (20), dans lequel l'air humide chaud est refroidi dans le séparateur d'eau (20) en dessous de la température de point de rosée pour produire de l'air humide saturé ayant une température déterminée,
- chauffer l'air humide provenant du séparateur d'eau (20) au delà d'une température déterminée, de telle sorte qu'il ait une humidité relative plus grande que 80 %, plus particulièrement plus grande que 90 % lors de l'extraction consécutive hors de l'agencement de conduits, et
- extraire l'air humide chauffé sous forme de courant d'air humide hors de l'agencement de conduits (8).

2. Procédé selon la revendication 1, dans lequel, lors de l'étape d'introduction de la vapeur d'eau dans le flux d'air, la vapeur d'eau surchauffée est introduite dans le flux d'air.

3. Procédé selon l'une quelconque des revendications précédentes, dans lequel le flux d'air humide est dirigé sous forme de jet sur un liquide sur un support liquide (42) pour soumettre ledit liquide à un traitement de mélange avec le jet d'air humide.

4. Procédé selon la revendication 3, dans lequel le jet d'air humide (52) et / ou le support liquide (42) est dévié ou déplacé lors de l'exposition au liquide, de sorte à ce que le jet d'air humide (52) balaie le support liquide au moins par zone.

5. Procédé selon l'une quelconque des revendications 3 ou 4, dans lequel le support liquide (42) est une biopuce ayant des réactifs immobilisés sur le fond du support liquide et dans lequel le liquide contient des analytes qui peuvent former des liaisons avec les réactifs sur le fond du support liquide.

6. Dispositif pour la production d'un flux d'air humide, comprenant
- une source d'air comprimé (2) pour la production d'un flux d'air dans un agencement de conduits (8)
- une source de vapeur (10, 12, 14) pour la préparation d'une vapeur d'eau chaude,
- un mélangeur (18) pour l'introduction de la vapeur d'eau dans le flux d'air,
**caractérisé en ce qu'**il comprenne également :
- un séparateur d'eau (20) avec un condensateur d'eau thermostatisable pour refroidir l'air humide provenant du mélangeur (18) en dessous de la température de rosée pour produire de l'air humide saturé ayant une température déterminée, et un
- dispositif de sortie d'air humide (30, 32) pour extraire l'air humide, dans lequel le dispositif de sortie d'air humide (30, 32) présente une zone de conduits (30) avec des agents de réglage de la température (34) disposée en aval du séparateur d'eau (20) dans le sens de la voie d'écoulement, dans laquelle les agents de réglage de la température (34) sont agencés pour réchauffer l'air humide provenant du séparateur d'eau (20) au delà d'une température déterminée de telle sorte à ce qu'il ait, lors de l'extraction, une humidité relative plus grande que 80%, plus particulièrement plus grande que 90%.

7. Dispositif selon la revendication 6, dans lequel la source de d'air comprimé (2) comprend un compresseur pour la production d'air comprimé tiré de l'air ambiant et pour l'introduction d'air comprimé dans l'agencement de conduits (8).

8. Dispositif selon l'une des revendications 6 à 7, dans lequel la source de vapeur comprend un évaporateur (10) avec au moins une spire conductrice et un appareil de chauffage pour la spire conductrice ainsi qu'un appareil d'approvisionnement d'eau (12, 14) pour alimenter l'évaporateur (10) en eau liquide.

9. Dispositif selon la revendication 8, dans lequel l'appareil d'approvisionnement d'eau comprend un réservoir d'eau (14) et une pompe doseuse (12) pour l'alimentation de l'eau liquide du réservoir d'eau (14) vers l'évaporateur (10).

10. Dispositif selon l'une des revendications 6 à 9, dans lequel le mélangeur (18) comprend au moins une buse (16) pénétrant dans la voie d'écoulement de l'air pour souffler la vapeur d'eau dans le courant d'air.

11. Dispositif selon une des revendications 6 à 10, dans lequel une pompe à chaleur thermoélectrique (22) est associée au séparateur d'eau (20) pour réguler la température.

12. Dispositif selon une des revendications 6 à 11, qui comprend des moyens (2, 54, 56) pour réguler la pression d'air humide dans le dispositif de sortie d'air humide (30, 32).

13. Dispositif selon l'une des revendications 6 à 12, dans lequel la pression de l'air humide dans la zone de conduits (30) est réglable au moyen d'un dispositif de réglage de pression, qui comprend au moins un capteur de pression (54) pour la détection de la pression dans la zone de conduits (30) et un moyen d'établissement (2,56) pour influencer l'alimentation de l'air comprimé de la source d'air comprimé (2) au prorata de la variation de la pression effective par rapport à la pression exigée dans la zone de conduits (30).

14. Dispositif selon l'une quelconque des revendications 6 à 13, dans lequel la zone de conduits comprend une chambre de collection d'air humide (30) qui est équipée avec ou connectée à au moins une buse de sortie de l'air humide (32).
